# FASCICULE DE BREVET EUROPEEN

(11) **EP 4 286 033 B1**
(45) Date de publication et mention de la délivrance du brevet: **20.11.2024**
(21) Numéro de dépôt: 23159069.6
(22) Date de dépôt: 28.02.2023
(51) Int. Cl.: B01D 53/64, B01D 53/96

(54) **PROCÉDÉ DE DÉMERCURISATION DE FUMÉES**
VERFAHREN ZUR ENTFERNUNG VON QUECKSILBER AUS RAUCHGASEN
METHOD FOR REMOVING MERCURY FROM FUMES

(30) Priorité: 30.05.2022 FR 2205138
(43) Date de publication de la demande: 06.12.2023
(73) Titulaire: LAB, 69007 Lyon (FR)
(72) Inventeur: GOURMELON, Fabrice, Yves, François, Arnaud, 69006 LYON (FR); WEILLER, Olivier, 69320 FEYZIN (FR); VUONG, François, 83400 HYERES (FR); MICHAELY, Pascal, François, 69008 LYON (FR)
(74) Mandataire: Lavoix

(56) Documents cités:
- EP-A1- 3 586 944
- WO-A1-2019/235110
- WO-A1-2020/003845
- JP-A- 2021 065 827

## Description

La présente invention concerne un procédé de démercurisation de fumées.

Le mercure est un composé naturellement présent et encore utilisé significativement dans l'industrie. Le mercure est toxique sous toutes ses formes. Il est assimilable par pratiquement tous les organismes vivants et de ce fait se concentre au cours de la chaîne alimentaire. In fine, il est absorbé par l'homme et y développe sa toxicité. De ce point de vue, il est de peu d'importance que le mercure soit présent sous forme de métal, de sels organiques ou de composés organiques comme le méthylmercure.

L'industrie et les activités humaines rejettent dans l'atmosphère du mercure qui peut être transporté sur de très grandes distances. C'est pourquoi la plupart des pays ont mis en place des réglementations contraignantes afin de limiter les quantités de mercure qui sont rejetées dans l'environnement. Parmi les industries pouvant rejeter du mercure, on trouve les usines de production du chlore, les fonderies, les centrales thermiques au charbon qui contient naturellement du mercure, les cimenteries, et les incinérateurs de déchets. A titre d'exemple, le seuil réglementaire en France est actuellement de 50 µg/Nm³ pour les incinérateurs de déchets et il est régulièrement abaissé dans le cadre de durcissements de la réglementation, et ce jusqu'à par exemple 20 µg/Nm³.

Il existe de multiples procédés de traitement d'un flux, liquide ou gazeux, transportant du mercure. L'invention s'intéresse aux procédés de démercurisation, par voie sèche, de fumées issues d'installations de combustion, contenant des vapeurs de mercure. Dans ces procédés secs, le mercure est capté par un réactif de démercurisation, tel que des adsorbants, typiquement le charbon actif, du coke de lignite, des additifs halogénés, et des additifs soufrés, pour ne citer que ces quelques exemples. Ce réactif de démercurisation, qui se présente généralement sous forme d'une poudre, est injecté directement dans les fumées à traiter et fixe, notamment par adsorption, le mercure présent en phase gazeuse, avant d'être ensuite séparé des fumées par un séparateur gaz-solide, tel des filtres à manches ou des électrofiltres. Par exemple, WO2020/003845A1 divulgue un procédé et une installation de démercurisation de fumées qui sont issues d'un incinérateur. Les fumées à traiter sont envoyées à un séparateur gaz solide en amont duquel un réactif de démercurisation, en l'occurrence du charbon actif, est introduit dans les fumées. La concentration de mercure dans les fumées en aval du séparateur gaz-solide est mesurée par un compteur. Lorsque la valeur mesurée est inférieure à une première valeur de seuil, le charbon actif est introduit par intermittence avec une quantité spécifiée, tandis que lorsque la valeur mesurée est supérieure à la première valeur de seuil, le charbon actif est fourni en continu avec une quantité correspondant au taux de variation de la valeur mesurée.

Ces procédés secs de démercurisation sont efficaces, mais peuvent être mis à l'épreuve si la concentration en mercure dans les fumées entrant dans l'installation de traitement correspondante présente un pic de mercure, c'est-à-dire varie très rapidement et avec une grande amplitude. Par exemple, dans les incinérateurs de déchets en France, les concentrations ordinaires de mercure dans les fumées à traiter sont généralement de l'ordre de 100 µg/Nm³, alors que cette concentration peut passer soudainement, en quelques minutes, à des valeurs bien supérieures à 1000 µg/Nm³ lors de la combustion d'un déchet à forte teneur en mercure. Ces pics de mercure peuvent arriver fréquemment, en donnant un profil en peigne au signal de concentration en mercure à l'entrée de l'installation de traitement de fumées. Dans ces conditions, un procédé calibré peut présenter de réelles difficultés à réagir assez vite pour traiter le mercure entrant dans l'installation de traitement de fumées. Si le procédé ne réagit pas assez rapidement ou n'est pas adapté, cela peut conduire à des dépassements, par rapport aux limites réglementaires, des émissions de mercure dans les fumées en aval de l'installation de traitement de fumées, mais aussi à des surconsommations en réactif de démercurisation.

Un autre aspect, souvent négligé, en lien avec les pics de mercure est que le temps de séjour du mercure dans l'installation de traitement de fumées peut être prolongé en raison d'un relargage diffus du mercure dans les fumées circulant dans l'installation.

En effet, lors d'un pic de mercure, le passage d'une forte concentration de mercure dans l'installation de traitement de fumées, même pendant une durée courte, tend à contaminer les gaines et les équipements de l'installation, le mercure étant facilement adsorbé sur les parois de ces gaines et de ces équipements, en particulier en dessous de 200°C. Une fois que le pic de mercure est passé, le mercure se désorbe lentement des parois et est ainsi relargué de manière différée par rapport au pic de mercure, en étalant les émissions de mercure dans toute l'installation de traitement de fumée. Le profil de concentration du mercure s'étale ainsi temporellement le long de l'installation de traitement de fumées. Autrement dit, un effet mémoire comparable à l'effet mémoire connu pour les dioxines existe. Cet effet mémoire est d'autant plus important que la chaîne de traitement que traversent les fumées dans l'installation avant d'être rejetées à l'environnement est longue et complexe. A cet égard, des unités de dénitrification catalytique de l'installation de traitement de fumées, placées en aval du séparateur gaz-solide, sont particulièrement sensibles à ce phénomène car les matériaux utilisés dans ces unités de dénitrification catalytique sont capables d'adsorber le mercure, de réagir chimiquement avec le mercure, généralement par oxydation, et de stocker une quantité significative de mercure, avant de relarguer ce dernier de manière différée, pour différentes raisons comme un excès de polluants acides dans les fumées ou bien une hausse de température. Cette situation doit être évitée car le mercure risque d'être réémis dans les fumées de manière incontrôlée sans qu'on puisse intervenir car le catalyseur de dénitrification est situé en bout de chaîne de traitement.

Par ailleurs, le relargage diffus du mercure peut aussi résulter du fait que, après le passage d'un pic de mercure, une grande partie du mercure se retrouve piégée dans les solides collectés par le séparateur gaz-solide, ces solides collectés formant un gâteau de filtration dans le séparateur. Une fois que le pic de mercure est passé, ce gâteau de filtration risque de relarguer le mercure qu'il contient dans les fumées traversant le gâteau de filtration, le mercure étant alors réémis dans les fumées sortant du séparateur alors que la teneur en mercure dans les fumées entrant dans l'installation de traitement de fumées sera redescendue à une valeur ordinaire, par exemple de l'ordre de 100 µg/Nm³. Ceci peut être accentué par le fait que l'adsorption du mercure se fait par physisorption quand la portion de mercure élémentaire est grande et que le réactif de démercurisation n'est pas imprégné chimiquement.

De plus, les risques de relargage peuvent être accentués dans le cas où une partie des solides collectés par le séparateur gaz-solide est recyclée dans les fumées à traiter, en étant introduite en amont du séparateur gaz-solide. Les solides collectés au niveau du séparateur gaz-solide sont composés de poussières de combustion et de réactifs de démercurisation usés ou non usés, ainsi que généralement de réactifs de neutralisation usés et non usés, tels que la chaux ou le bicarbonate de sodium, qui ont été introduits dans les fumées en amont du séparateur gaz solide à traiter afin de neutraliser les gaz acides présents dans ces dernières. La recirculation d'une partie de ces solides dans les fumées à traiter permet d'augmenter les rendements de captation des polluants. En effet, le temps de séjour des réactifs est accru et la concentration en réactifs dans les fumées est élevée. Cette disposition est plus coûteuse en investissement, mais permet d'économiser les coûts en réactifs. En revanche, la recirculation peut entrainer des effets non souhaités car le mercure contenu dans les solides ainsi recyclés risque de repasser en phase gazeuse dans les fumées, en étalant alors la durée de relargage diffus du mercure dans les fumées circulant dans l'installation de traitement de fumées. Ce phénomène est souvent accentué par une hausse de température et/ou par une faible concentration en mercure dans les fumées à traiter alors que les réactifs de démercurisation en sont saturés après exposition à un fort pic de mercure. La force motrice peut ainsi être inversée : le transfert massique du mercure peut alors être des solides vers la phase gazeuse, ce qui est l'effet inverse recherché.

Le but de la présente invention est de proposer un procédé de démercurisation de fumées, qui soit amélioré en combinant les effets positifs de la recirculation des réactifs solides et une régulation appropriée pour tenir compte des pics de concentration en mercure dans les fumées.

A cet effet, l'invention a pour objet un procédé de démercurisation de fumées, tel que défini à la revendication 1.

Le procédé de démercurisation selon l'invention est particulièrement ingénieux, en prévoyant la recirculation et la réactivation d'une fraction recyclée des solides collectés par le séparateur gaz solide, tout en contrôlant les émissions de mercure dans les fumées traitées, moyennant un ralentissement dans le temps de la baisse du dosage du réactif de démercurisation suite à un pic de mercure. Le relargage diffus du mercure, expliqué plus haut et particulièrement délétère en présence d'une boucle de recirculation, est ainsi efficacement neutralisé grâce à l'invention. Selon des spécificités et options de mise en oeuvre avantageuses, qui seront détaillées par la suite, l'efficacité et la praticité de ce procédé peuvent encore être renforcées.

Des caractéristiques additionnelles avantageuses du procédé conforme à l'invention sont spécifiées aux autres revendications.

L'invention sera mieux comprise à la lecture de la description qui va suivre, donnée uniquement à titre d'exemple et faite en se référant aux dessins sur lesquels :
- la figure 1 est un schéma d'une installation de traitement de fumées, mettant en oeuvre un procédé de démercurisation conforme à l'invention ;
- la figure 2 est un graphique illustrant la concentration en mercure dans des fumées à traiter, en fonction du temps ;
- la figure 3 est un graphique illustrant la variation temporelle de trois valeurs différentes, détaillées par la suite ; et
- les figures 4 et 5 sont des vues similaires à la figure 1 et illustrant respectivement des variantes de l'installation de traitement de fumées, qui sont associées à des variantes du procédé conforme à l'invention.

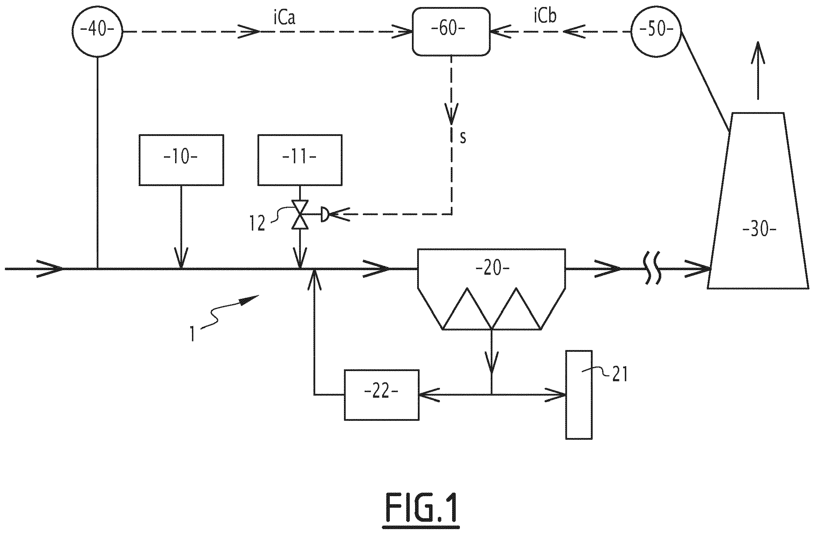

Sur la figure 1 est représentée une installation de traitement de fumées 1. Cette installation 1 est par exemple prévue en aval d'un incinérateur d'ordures ménagères, non représenté, dont les fumées de combustion sont envoyées en entrée de l'installation 1. Une installation similaire peut être retrouvée dans les centrales thermiques à charbon ou biomasse.

Les fumées envoyées à l'installation 1 contiennent du mercure, ainsi que, généralement, d'autres polluants tels que des gaz acides (HCl, SO₂), des oxydes d'azote, des poussières et des métaux lourds autres que le mercure. Le mercure contenu dans les fumées à traiter peut être présent sous diverses formes, à savoir élémentaire, oxydé et particulaire.

L'installation 1 comporte un séparateur gaz-solide 20 qui relève d'une technologie connue en soi. Ce séparateur gaz-solide 20 est par exemple un filtre à manches ou un électrofiltre ou une unité cyclonique ou un dispositif combinant ces derniers. En pratique, le séparateur gaz-solide 20 opère typiquement à une température comprise entre 120°C et 250°C, c'est-à-dire que la température des fumées entrant dans le séparateur gaz-solide 20 est dans la plage précitée.

L'installation 1 comporte également un silo 10 contenant un réactif de neutralisation de gaz acides, tel que la chaux ou le bicarbonate de sodium. Ce réactif de neutralisation de gaz acides est introduit, depuis le silo 10, directement dans les fumées à traiter en amont du séparateur gaz-solide 20, afin de neutraliser les gaz acides présents dans les fumées à traiter. De manière connue en soi et non limitative de l'invention, le débit du réactif de neutralisation de gaz acides est régulé en fonction de la composition en polluants dans les fumées à traiter.

L'installation 1 comporte également un silo 11 contenant un réactif de démercurisation. Ce réactif de démercurisation est introduit, depuis le silo 11, directement dans les fumées à traiter en amont du séparateur gaz-solide 20, afin de capter le mercure présent dans les fumées à traiter. En pratique, la dispersion du réactif de démercurisation est opérée dans la gaine où circulent les fumées ou bien dans un compartiment dédié à l'adsorption du mercure.

La nature du réactif de démercurisation n'est pas limitative. A titre préférentiel, le réactif de démercurisation comprend :
- du charbon activé, imprégné chimiquement ou non, ce charbon activé étant notamment d'origine végétale ou inorganique, et/ou
- du coke de lignite activé, imprégné chimiquement ou non, et/ou
- une argile.

De même, la forme sous laquelle le réactif de démercurisation est introduit dans les fumées n'est pas limitative. Le réactif de démercurisation peut ainsi être solide, typiquement sous forme pulvérulente, mais peut aussi être liquide, typiquement sous forme de gouttelettes, comme enseigné dans WO 2019/081635.

Optionnellement, le réactif de démercurisation comprend un ou plusieurs additifs, solides ou liquides, respectivement constitués :
- d'un composé minéral, tel que la silice, la chaux ou l'oxyde de fer,
- d'un composé à base de soufre, tel qu'un sulfure ou polysulfure alcalin, et
- d'un sel halogénure, notamment alcalin ou alcalinoterreux.

Le séparateur gaz-solide 20 est adapté pour séparer les poussières et réactifs solides que les fumées contiennent lorsque ces dernières traversent le séparateur gaz-solide. Les solides collectés par le séparateur gaz-solide 20 sont répartis en une première fraction, qui est sortie de l'installation 1, en étant par exemple stockée dans un silo 21, et une seconde fraction qui est recyclée, en étant renvoyée dans les fumées à traiter en amont du séparateur gaz-solide 20 en transitant par un dispositif de traitement 22 où sont réactivés les solides de la fraction recyclée, en particulier les réactifs de démercurisation et de neutralisation usés. Cette fraction recyclée représente de préférence entre 50 et 95%, voire entre 70 et 90%, de la totalité des solides collectés par le séparateur gaz-solide 20.

De multiples formes de réalisation sont envisageables pour le dispositif de traitement 22. Selon une première possibilité, le dispositif de traitement 22 comprend un réacteur de réactivation, tel qu'un lit fluidisé, une auge de mixage, un tambour de brassage, etc., ce réacteur de réactivation agissant de manière chimique et/ou mécanique et/ou thermique sur les solides s'y trouvant pour les réactiver. Le temps de séjour de la fraction recyclée dans un tel réacteur de réactivation est typiquement compris entre 5 et 60 minutes. Selon une deuxième possibilité, le dispositif de traitement 22 comprend une enceinte de maturation, telle qu'un silo, dans laquelle la réactivation résulte d'un phénomène de vieillissement. Le temps de séjour de la fraction recyclée dans une telle enceinte de maturation est typiquement compris entre 5 et 20 heures.

Quelle que soit la forme de réalisation du dispositif de traitement 22, mais de préférence dans le cas où le dispositif de traitement 22 comprend un réacteur de réactivation, un fluide, tel que des gouttelettes d'eau ou de la vapeur d'eau, est avantageusement admis à l'intérieur de ce dispositif de traitement, notamment du réacteur de réactivation, pour être mis en contact, voire mélangé avec les solides s'y trouvant pour favoriser leur réactivation. WO2018/109072 divulgue ainsi un réacteur de réactivation associant des hélices de convoyage, des pales de mixage et une distribution de vapeur d'eau.

De manière connue en soi, les réactifs de démercurisation et de neutralisation sont partiellement ou totalement usés, autrement dit « désactivés », suite à leur mise en contact avec les fumées à traiter en amont du séparateur gaz-solide 20. Par exemple, une couche de matière en surface des particules d'un réactif alcalin de type hydroxyde de calcium se forme suite à la réaction avec les gaz acides comme HCl, SO₂, SO₃ et HF. Ceci a pour effet de réduire la capacité du réactif vis-à-vis des polluants par effet dit de blindage. Le mercure dans les fumées est généralement piégé par adsorption. La réactivation par le dispositif de traitement 22 permet de retrouver une partie des capacités des réactifs usés, en particulier du réactif de démercurisation usé, et ce par brassage mécanique qui homogénéise la répartition des polluants dans les solides, et/ou par friction entre particules pour libérer les sites actifs, et/ou par réaction chimique avec de l'eau liquide ou vapeur par exemple qui permet d'assurer une diffusion et redistribution des espèces entre la surface et le coeur du réactif.

Dans tous les cas, les solides sortant du dispositif de traitement 22 forment un flux qui est introduit directement dans les fumées à traiter en amont du séparateur gaz-solide 20. En pratique, les positions relatives du point d'introduction de ce flux dans les fumées à traiter, du point d'introduction du réactif de démercurisation depuis le silo 11 dans les fumées à traiter, et du point d'introduction du réactif de neutralisation depuis le silo 10 dans les fumées à traiter sont indifférentes.

L'installation 1 est optionnellement complétée par d'autres unités de traitement, placées en aval du séparateur gaz-solide 20, telles qu'une unité de dénitrification catalytique par exemple. De plus, d'autres équipements comme un ventilateur, un échangeur de chaleur ou un silo de stockage d'un autre réactif peuvent être présents au sein de l'installation 1. Dans tous les cas, les fumées traitées par l'installation 1 sont prévues pour sortir de cette dernière via une cheminée 30 par laquelle les fumées traitées sont rejetées dans l'environnement.

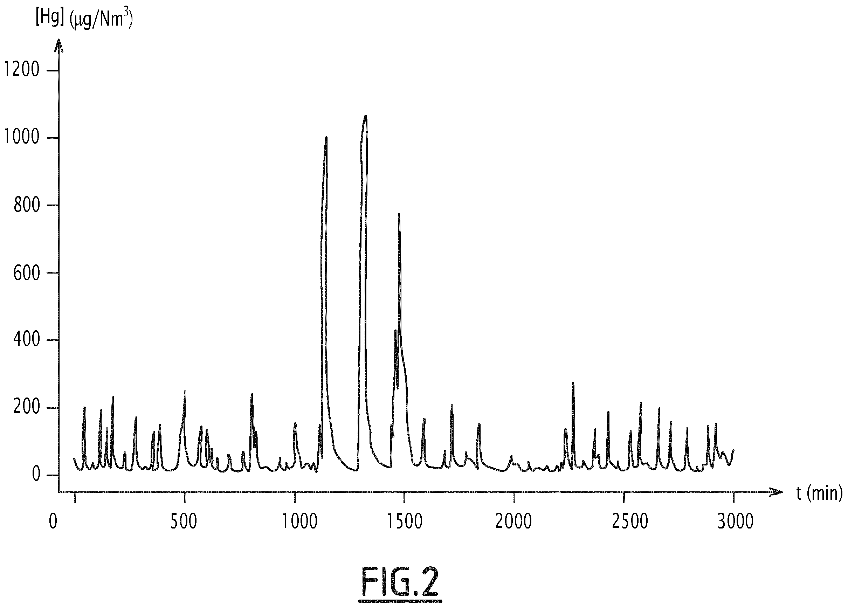

Avant de s'intéresser aux autres composants de l'installation 1, il est intéressant de comprendre comment peut évoluer dans le temps la concentration du mercure dans les fumées à traiter, c'est-à-dire les fumées entrant dans l'installation 1. Ainsi, la figure 2 illustre la concentration, en fonction du temps, en vapeur de mercure total (élémentaire et oxydé) dans des fumées qui sont issues d'un incinérateur d'ordures ménagères et qui sont susceptibles d'être envoyées à l'installation 1 aux fins de leur traitement, en particulier de leur démercurisation. Sur cet exemple réel illustré par la figure 2, on constate que la concentration de mercure, notée [Hg], est le plus souvent autour d'une valeur de l'ordre de 100 µg/Nm³, mais qu'elle connaît, à trois reprises, des pics de mercure lors desquels la concentration de mercure varie de manière rapide et avec une grande intensité, en atteignant plus de 800, voire 1000 µg/Nm³, en quelques secondes ou dizaines de secondes seulement. Les variations des autres polluants, tels que les gaz acides et les oxydes d'azote, ne présentent généralement pas de variations aussi brusques.

En revenant maintenant à la description de l'installation 1 de la figure 1, on va s'intéresser à la façon dont cette installation 1 est conçue pour réguler les émissions de mercure en sortie de l'installation 1, tout en tenant compte de l'évolution temporelle de la concentration en mercure dans les fumées à traiter entrant dans l'installation, y compris lorsque cette évolution temporelle inclut un ou plusieurs pics de mercure. A défaut d'une telle régulation, les concentrations en mercure dans les fumées traitées pourraient varier de plus de deux ordres de grandeur en quelques dizaines de secondes.

A cet effet, dans la forme de réalisation considérée sur la figure 1, l'installation 1 comporte deux analyseurs 40 et 50, ainsi qu'un calculateur 60.

L'analyseur 40 est adapté pour, en temps réel, déterminer la concentration du mercure dans les fumées à la fois en amont du point d'introduction dans ces dernières du réactif de démercurisation depuis le silo 11 et en amont du point d'introduction dans ces fumées du flux sortant du dispositif de traitement 22, ainsi que transmettre un signal d'information iCa représentatif de la valeur de cette concentration, cette valeur de concentration amont étant appelée Ca par la suite. Il n'est pas nécessaire que le signal d'information iCa émis par l'analyseur 40 soit strictement continu, dans le sens où les valeurs de concentration amont Ca déterminées par l'analyseur 40 sont à fournir, via le signal d'information iCa, à chaque instant, c'est-à-dire à chaque répétition d'une fréquence temporelle prédéterminée, qui est de l'ordre de la minute et qui vaut par exemple entre trente secondes et trois minutes environ.

L'analyseur 50 est adapté pour, en temps réel, déterminer la concentration du mercure dans les fumées en aval du séparateur gaz-solide 20, ainsi que transmettre un signal d'information iCb représentatif de la valeur de cette concentration, cette valeur de concentration aval étant appelée Cb par la suite. Cet analyseur 50 est de préférence placé dans la cheminée 30. Similairement à l'analyseur 40, il n'est pas nécessaire que le signal d'information iCb émis par l'analyseur 50 soit un signal strictement continu, dans le sens où les valeurs de concentration aval Cb déterminées par l'analyseur 50 sont à fournir, via le signal d'information iCb, à chaque instant, c'est-à-dire à chaque répétition d'une fréquence temporelle prédéterminée, qui est de l'ordre de la minute et qui vaut par exemple entre trente secondes et trois minutes environ.

Les analyseurs 40 et 50 relèvent d'une technologie connue en soi, qui n'est pas limitative de l'invention. En pratique, les analyseurs 40 et 50 sont chacun sensibles à une ou plusieurs formes de mercure présentes dans les fumées à traiter, de sorte que leur signal d'information iCa et iCb donne une information sur la concentration en mercure total ou en une forme du mercure, contenu dans les fumées. Il n'est ainsi pas indispensable d'avoir une connaissance de la spéciation du mercure dans les fumées, car les signaux d'information iCa et iCb sont prévus, comme expliqué par la suite, pour être utilisés pour suivre l'évolution temporelle de la concentration en mercure dans les fumées à traiter, étant remarqué que les différentes formes du mercure connaissent généralement la même évolution temporelle de leur concentration.

Le calculateur 60 est, quant à lui, adapté pour commander en temps réel le dosage du réactif de démercurisation introduit, depuis le silo 11, dans les fumées en amont du point d'introduction de ce réactif de démercurisation dans les fumées à traiter. A cet effet, le calculateur 60 est conçu pour exécuter en permanence, c'est-à-dire de façon répétée selon une fréquence temporelle prédéterminée, une séquence de calculs, qui sera détaillée plus loin. De plus, le calculateur 60 est relié aux analyseurs 40 et 50 par toute liaison permettant de transmettre les signaux d'information iCa et iCb depuis les analyseurs 40 et 50 jusqu'au calculateur 60. Le calculateur 60 est également relié à un organe 12 qui commande le flux du réactif de démercurisation sortant du silo 11, cet organe 12 étant par exemple une électrovanne, un sas rotatif, une vis de transport ou tout autre moyen de transport et de contrôle du débit de poudre solide connu par l'homme de l'art. Là encore, la forme de réalisation de la liaison entre le calculateur 60 et l'organe 12 est indifférente du moment qu'elle permet de transmettre, depuis le calculateur 60 jusqu'à l'organe 12, un signal de commande s qui est représentatif du résultat de la séquence de calculs exécutée par le calculateur 60.

La forme de réalisation du calculateur 60 n'est pas limitative du moment que ce calculateur 60 est apte, en temps réel, à traiter, notamment numériquement, les signaux d'information iCa et iCb en appliquant la séquence de calculs précitée, ainsi qu'à émettre le signal de commande s. Ainsi, le calculateur 60 peut être une unité de calcul autonome, notamment sous la forme d'un automate programmable, ou appartenir à un système de supervision, notamment un système informatique.

On va maintenant décrire en détail un procédé mis en oeuvre par l'installation 1, par lequel les fumées à traiter entrant dans cette installation sont épurées, en particulier démercurisées.

On considère que l'installation 1 est en régime établi et que, après que le réactif de neutralisation de gaz acides et le réactif de démercurisation aient été introduits directement dans les fumées à traiter en amont du séparateur gaz-solide 20 depuis respectivement le silo 10 et le silo 11, les fumées à traiter sont envoyées au séparateur gaz-solide 20. La séparation opérée par ce dernier conduit à la formation d'un gâteau de filtration dans le séparateur gaz-solide 20, accroché par exemple aux manches de filtrage de ce séparateur, ainsi qu'à la recirculation, via le dispositif de traitement 22, d'une partie des solides collectés par le séparateur gaz-solide 20, à savoir la fraction recyclée précitée. On comprend que, en plus des flux de réactifs de démercurisation et de neutralisation qui sont issus des silos 11 et 10, du réactif de démercurisation et du réactif de neutralisation sont introduits dans les fumées à traiter via le flux sortant du dispositif de traitement 22, du fait de la recirculation et de la réactivation de la fraction recyclée.

A chaque instant de ce régime établi, c'est-à-dire à chaque répétition d'une fréquence temporelle prédéterminée, valant par exemple entre trente secondes et trois minutes environ et correspondant ici à la fréquence d'exécution de la séquence de calculs par le calculateur 60, le réactif de démercurisation est dosé en mettant en oeuvre les opérations suivantes.

Par une opération a), on détermine à chaque instant une valeur de concentration en mercure, appelée Ce par la suite, à partir de :
- la concentration du mercure dans les fumées en amont des points d'introduction dans les fumées à traiter du réactif de démercurisation et du flux sortant du dispositif de traitement 22, en particulier la valeur de concentration amont Ca issue, notamment par mesure directe, de l'analyseur 40, et/ou
- la concentration du mercure dans les fumées en aval du séparateur gaz-solide 20, en particulier la valeur de concentration aval Cb issue, notamment par mesure directe, de l'analyseur 50.

La valeur de concentration en mercure Ce peut donc soit associer mathématiquement les valeurs de concentration amont Ca et aval Cb, soit n'être basée que sur l'une ou l'autre des valeurs de concentration amont Ca et aval Cb. En pratique, la valeur de concentration en mercure Ce est préférentiellement déterminée uniquement à partir de la concentration du mercure dans les fumées en amont des points d'introduction dans les fumées à traiter du réactif de démercurisation et du flux sortant du dispositif de traitement 22, en particulier uniquement à partir de la valeur de concentration amont Ca, en étant par exemple égale à cette dernière : on comprend que l'analyseur 50 n'est alors pas nécessaire au sein de l'installation 1 pour disposer de la valeur de concentration en mercure Cc, étant toutefois noté que la présence de cet analyseur 50 est souvent imposée pour des raisons réglementaires indépendantes de l'invention.

Dans tous les cas, la valeur de concentration en mercure Ce est fournie à chaque instant au calculateur 60, en particulier via les signaux d'information iCa et/ou iCb.

Par une opération b), on tient compte à chaque instant de l'occurrence de pics de mercure pour adapter le dosage du réactif de démercurisation.

En pratique, l'occurrence des pics de mercure peut être surveillée et/ou renseignée de diverses manières, le cas échéant par un opérateur, autrement dit pas de manière automatique, mais de manière manuelle.

Ceci étant, l'occurrence des pics de mercure est préférentiellement détectée à partir de la valeur de concentration en mercure Cc, notamment à partir d'uniquement la valeur de concentration amont Ca, en faisant exécuter par le calculateur 60 un algorithme de surveillance, connu en soi, appliqué à cette valeur de concentration Cc, le cas échéant uniquement Ca.

Une méthode simple, donnée à titre non limitatif, est de soustraire la mesure de concentration de mercure à l'instant t à la mesure précédente, par exemple t et t moins une minute dans le cas où les analyseurs 40 et 50 donnent chacun une mesure toutes les minutes : si la valeur dépasse un seuil préfixé, cela signifie que l'accroissement de la concentration de mercure dans les fumées a augmenté fortement pendant un laps de temps très court. Ce seuil de dépassement est fixé selon l'appréciation de l'homme de l'art et de l'efficacité souhaitée. Dans ce cas, le signal peut être considéré comme un pic.

A titre d'exemple alternatif, lui aussi pratique et fiable, un filtre de Savitzky-Golay est appliqué sur les N valeurs de la concentration en mercure Cc, le cas échéant uniquement de la concentration amont Ca, déterminées juste avant l'instant considéré, N étant supérieur ou égal 3, de préférence 6. On peut envisager d'autres algorithmes de surveillance appliqués sur les N valeurs de la concentration en mercure Cc, le cas échéant de la concentration amont Ca, déterminées juste avant l'instant considéré, N étant supérieur ou égal 3 : à titre d'exemples non limitatifs, l'algorithme de surveillance utilisé repose sur la moyenne mobile arithmétique, la moyenne mobile pondérée ou bien la moyenne mobile exponentielle, calculée pour les N valeurs précitées.

Egalement par l'opération b), le dosage du réactif de démercurisation est différencié selon que l'instant considéré appartient ou non à une période qui est associée à chaque pic de mercure, cette période débutant sensiblement à l'apogée du pic de mercure concerné, autrement dit dans une région de sommet de ce dernier. Il peut notamment être prévu que cette période débute à un instant où la valeur de concentration en mercure Ca ou Cb ou Ce dépasse un seuil prédéterminé, qui est fixé selon l'appréciation de l'homme de l'art et de l'efficacité souhaitée.

En dehors de la période précitée qui est associée à chaque pic de mercure, l'opération b) prévoit, à chaque instant, de doser le réactif de démercurisation en appliquant à la valeur de concentration en mercure Cc une fonction f, qui est préétablie et qui est croissante avec la valeur de concentration en mercure Ce. Cette fonction f est ici préenregistrée dans le calculateur 60 et appliquée par ce dernier. L'application de la fonction f permet de commander un dosage spécifique du réactif de démercurisation et fournit une valeur exprimée par exemple en grammes par normal m³ de fumées. Comme la fonction f est croissante avec la valeur de concentration en mercure Cc, on comprend que la valeur, à laquelle le réactif de démercurisation est dosé par la fonction f, est calculée basse lorsque les fumées à traiter contiennent peu de mercure et est calculée haute lorsque les fumées à traiter contiennent beaucoup de mercure.

La forme de la fonction f n'est pas limitative de l'invention. Ceci étant, il est préféré que la fonction f soit strictement croissante entre une grandeur minimale et une grandeur maximale de la valeur de concentration en mercure Cc, tout en étant constante en deçà de la grandeur minimale précitée et également constante au-delà de la grandeur maximale précitée. A titre d'alternatives également intéressantes, la fonction f est :
- strictement croissante entre une valeur nulle de la valeur de concentration en mercure Ce et une grandeur maximale de la valeur de concentration en mercure Cc, en étant constante au-delà de cette grandeur maximale, ou bien
- en escalier, c'est-à-dire constante sur des intervalles successifs de la valeur de concentration en mercure Cc.

Lors de la période précitée qui est associée à chaque pic de mercure, l'opération b) prévoit, à chaque instant, de doser le réactif de démercurisation en appliquant à la valeur de concentration en mercure Cc une fonction g, qui est différente de la fonction f et qui est préétablie, en étant ici préenregistrée dans le calculateur 60 et appliquée par ce dernier. De la même façon que la fonction f, l'application de la fonction g permet de commander un dosage spécifique du réactif de démercurisation, en fournissant une valeur exprimée par exemple en grammes par normal m³ de fumées, mais la fonction g est prévue de sorte que la valeur à laquelle le réactif de démercurisation est dosé par la fonction g est supérieure à celle à laquelle le réactif de démercurisation est dosé par la fonction f à l'instant considéré. De plus, la fonction g est décroissante avec le temps jusqu'à doser le réactif de démercurisation à une valeur égale ou inférieure à celle à laquelle le réactif de démercurisation est dosé par la fonction f à un instant où la période précitée prend fin. En pratique, la période précitée dure typiquement au moins 10 minutes, voire 15 minutes. Ainsi, comparativement à l'application de la fonction f, l'application de la fonction g commande une décroissance plus lente pour le dosage du réactif de démercurisation suite à un pic de mercure, ce qui revient à dire que ce dosage est « étendu ».

La forme de la fonction g n'est pas limitative de l'invention. A titre d'exemple, la fonction g est de la forme exp(-z*(t-t0)) où t est l'instant considéré exprimé en minutes et t0 est l'instant, exprimé en minutes, où la période précitée débute, tandis que z est une constante qui est par exemple comprise entre 0,05 et 0,35 et qui, le cas échant, est choisie par un opérateur pilotant le procédé, selon notamment les spécificités des fumées à traiter ou les performances d'épuration souhaitées. A titre d'alternatives, la fonction g est :
- de la forme 1-(z*(t-t0)), ou bien
- de la forme 1/(cosh(z*(t-t0)), où cosh est la fonction cosinus hyperbolique.

A l'issue de l'opération b), la valeur à laquelle est dosée le réactif de démercurisation est, chaque instant, utilisée pour commander l'organe 12, en étant ici transmise via le signal de commande s généré par le calculateur 60. Par une opération c) optionnelle mais avantageuse, on ajuste par rétroaction, à chaque instant, la valeur à laquelle le réactif de démercurisation est dosée à l'issue de l'opération b), à partir de la concentration en mercure dans les fumées en aval du séparateur gaz-solide 20, en particulier à partir de la valeur de concentration aval Cb. Ainsi, l'opération optionnelle c) permet d'appliquer une rétroaction d'ajustement sur la valeur de dosage issue de l'opération b). La correction appliquée par l'opération c) est connue en soi et peut notamment être mise en oeuvre par un algorithme PID (acronyme de « proportionnel, intégral, dérivé »), ici exécuté par le calculateur 60.

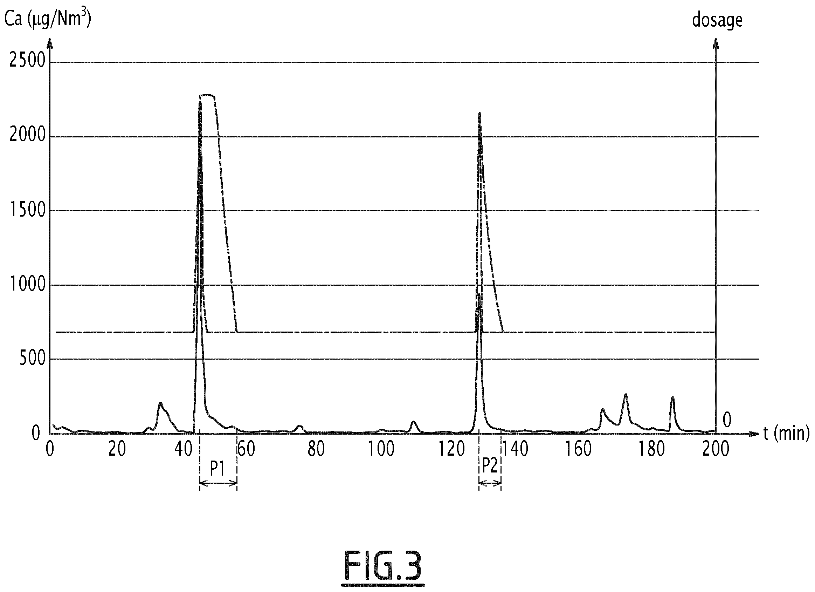

La figure 3 illustre un exemple opératoire avec l'occurrence de deux pics de mercure.

La courbe en traits pleins sur la figure 3, qui est associée à l'échelle de gauche, est l'évolution temporelle de la valeur de concentration amont Ca, autrement dit l'évolution temporelle de la concentration de mercure dans les fumées à traiter, déterminée par l'analyseur 40. La valeur de concentration amont Ca peut être associée à la mesure de la concentration en mercure total, ou bien la concentration en mercure élémentaire ou éventuellement la fraction mercure oxydée. En pratique, le choix de ce qui est effectivement mesuré au travers de la valeur de concentration amont Ca est laissé à l'appréciation de l'homme de l'art en prenant en compte les spécificités de l'analyseur 40, des contraintes du procédé, ou par choix économique. Comme évoqué plus haut, il suffit que la valeur de concentration amont Ca soit représentative de la quantité de mercure à traiter par l'installation. Cette courbe en traits pleins fait apparaître les deux pics de mercure, respectivement au temps t=45 minutes et t=130 minutes environ. Le pic de mercure le plus intense est associé à une valeur de 2200 µg/Nm³ environ pour la valeur de concentration amont Ca. Mis à part ces deux pics de mercure, la courbe de la figure 3 n'est évidemment pas plane, mais ne montre pas d'autres pics de mercure, tels qu'appréciés manuellement par l'opérateur ou tels que détectés automatiquement par le calculateur 60, comme expliqué plus haut.

La courbe en pointillés et la courbe en traits mixtes, qui sont toutes les deux associées à une même échelle à droite du graphique de la figure 3, montrent l'évolution temporelle de, respectivement, la valeur de dosage par la fonction f et la valeur de dosage issue de l'opération b). La comparaison entre la courbe en pointillés et la courbe en traits mixtes permet de constater que, lors de chacun des pics de mercure, la valeur de dosage issue de l'opération b) est ralentie dans le temps par rapport à la valeur de dosage par la fonction f. Ainsi, sur toute la durée de chacune des périodes précitées, qui sont respectivement associées aux deux pics de mercure, en étant respectivement notées P1 et P2 sur la figure 3, la valeur de dosage issue de l'opération b) est pilotée par application de la fonction g, en ralentissant sa décroissance temporelle comparativement à l'application de la fonction f, ce qui revient à dire que la quantité de réactif de démercurisation est significativement augmentée. En dehors de ces périodes P1 et P2, la valeur de dosage issue de l'opération b) est pilotée par application de la fonction f.

En tenant compte des explications données jusqu'ici, on comprend que la régulation du dosage du réactif de démercurisation, opérée par le procédé évite le relargage diffus de mercure, expliqué au début du présent document, et ce même avec la recirculation de la fraction recyclée des solides, transitant par le dispositif de traitement 22. En effet, on rappelle que le recyclage et la réactivation des réactifs de démercurisation et de neutralisation, via le dispositif de traitement 22, permettent deux choses : augmenter le temps de séjour des réactifs exposés aux polluants des fumées, et augmenter la concentration en réactifs dans les fumées donc la force motrice pour le transfert du polluant, ce qui permet alors d'économiser la consommation en réactifs. En revanche, le mercure, notamment élémentaire, présent en grande quantité lors des pics de mercure est moins bien fixé durablement, en particulier lorsque le réactif de démercurisation utilisé n'est pas imprégné chimiquement. En effet, le mercure est piégé principalement par physisorption, suivant un transfert de la phase gaz vers la phase solide de manière réversible, c'est-à-dire que le sens du transfert est inversé en cas de hausse de température ou d'une baisse nette de la concentration en mercure dans les fumées par exemple. Grâce au procédé détaillé ci-dessus, le dosage du réactif de démercurisation permet, lors des pics de mercure, que le mercure capté dans les réactifs saturés soit transféré vers du réactif frais lors du recyclage et de la réactivation via le dispositif de traitement 22. Une adjonction de fluide, tel que de la vapeur d'eau ou de fines gouttelettes d'eau liquide, de préférence avec brassage mécanique, au sein du dispositif de traitement 22, permet d'accélérer le processus et forcer le mercure à se fixer sur les sites les plus énergétiques des réactifs de démercurisation. Le procédé permet ainsi de faire face efficacement à un pic de mercure arrivant dans le traitement des fumées. D'un côté, la recirculation et la réactivation de la fraction recyclée réduisent efficacement la concentration de mercure dans les fumées suite à une arrivée soudaine de mercure. De l'autre, l'injection « étendue » du réactif de démercurisation et la réactivation des réactifs permettent de fixer le mercure durablement et d'éviter la réémission de ce dernier dans les fumées.

Les effets positifs du procédé suivant l'invention sont ainsi multiples : réduire les émissions de mercure dans l'atmosphère, protéger les équipements de l'installation pouvant être empoisonnés par le mercure, éviter les émissions non contrôlées de mercure, par exemple les cycles adsorption et relargage du mercure dans les réacteurs catalytiques de dénitrification situés en aval du séparateur gaz solide 20.

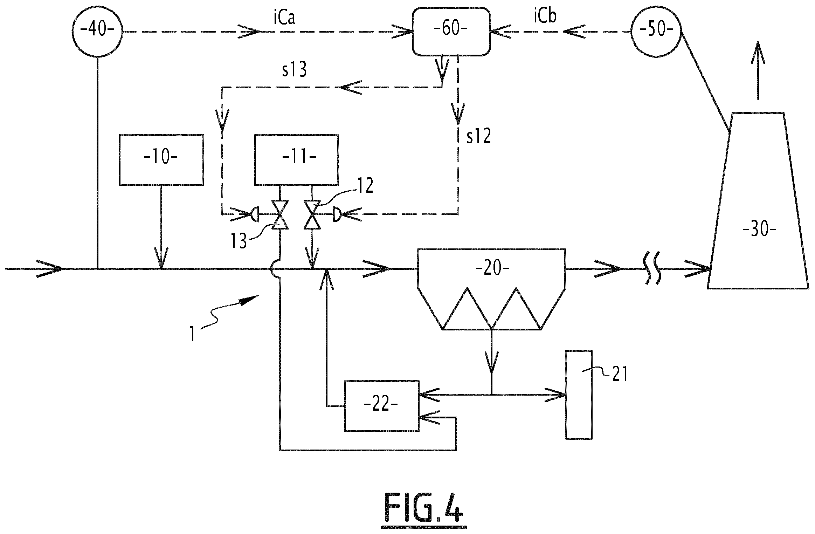

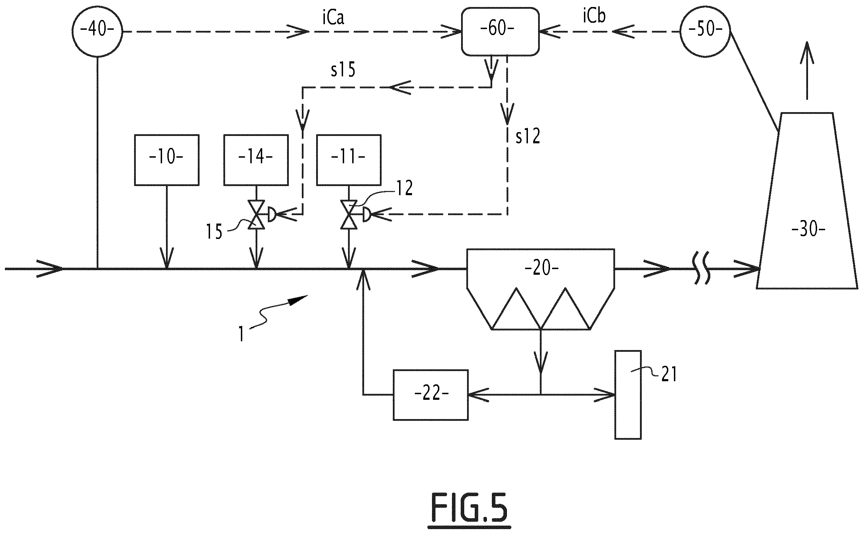

Des aménagements optionnels au procédé de démercurisation qui vient d'être détaillé sont envisagés respectivement en lien avec la figure 4 et la figure 5.

A la figure 4, le réactif de démercurisation issu du silo 11 peut être introduit non pas en totalité directement dans les fumées à traiter, mais au moins pour une partie directement dans le dispositif de traitement 22. A cet effet, en plus de l'organe 12 qui commande le flux de réactif de démercurisation, issu du silo 11 et introduit directement dans les fumées à traiter, l'installation 1 comporte un organe 13 qui commande le flux de réactif de démercurisation issu du silo 11 et introduit directement dans le dispositif de traitement 22. Bien entendu, la part du réactif de démercurisation introduit directement dans le dispositif de traitement 22 rejoint ensuite les fumées à traiter, via le flux sortant du dispositif de traitement 22. Le procédé décrit plus haut est inchangé, si ce n'est que la valeur de dosage issue à chaque instant de l'opération b) ou, le cas échéant, de l'opération optionnelle c), est répartie entre les deux flux de réactif de démercurisation issus du silo 11, en étant ici transmise via deux signaux de commande respectifs, notés s12 et s13 sur la figure 4.

Cet aménagement du procédé, illustré à la figure 4, permet de mettre en contact du réactif de démercurisation frais directement avec la fraction recyclée des solides collectés par le séparateur gaz solide 20, en permettant le cas échéant de fixer le mercure plus durablement.

A la figure 5, l'installation 1 est, comparativement à la figure 1, complétée par un silo 14. Le réactif de démercurisation est réparti entre le silo 11 et le silo 14. Plus précisément, le réactif de démercurisation comprend à la fois un premier réactif de démercurisation, qui est contenu dans le silo 11, et un second réactif de démercurisation, qui est contenu dans le silo 14 et qui est différent du premier réactif de démercurisation en ce qu'il présente une activité démercurisante supérieure à celle du premier réactif de démercurisation. Autrement dit, le second réactif de démercurisation présente des propriétés de démercurisation complémentaires ou plus avancées que celles du premier réactif de démercurisation. En particulier, le premier réactif de démercurisation n'est pas imprégné chimiquement, alors que le second réactif de démercurisation est imprégné chimiquement. Le procédé décrit plus haut est inchangé, si ce n'est que, en dehors de la période précitée associée à chaque pic de mercure, le premier réactif de démercurisation est utilisé mais pas le second réactif de démercurisation, tandis que lors de la période précitée associée à chaque pic de mercure, le second réactif de démercurisation est utilisé et, optionnellement, le premier réactif de démercurisation est aussi utilisé. A cet effet, le silo 14 est associé à un organe 15 qui commande le flux du second réactif de démercurisation : lors de la mise en oeuvre du procédé, la valeur de dosage issue à chaque instant de l'opération b) ou, le cas échéant, de l'opération optionnelle c), est appliquée à l'un et/ou l'autre des silos 11 et 14, en étant ici transmise via des signaux de commande respectifs, notés s12 et s15 sur la figure 5.

Cet aménagement du procédé, illustré à la figure 5, permet de fixer efficacement le mercure de manière optimale et économique.

Bien entendu, les aménagements du procédé, respectivement illustrés aux figures 4 et 5, sont combinables.

## Revendications

1. Procédé de démercurisation de fumées,
dans lequel des fumées à traiter sont envoyées à un séparateur gaz solide (20),
dans lequel un réactif de démercurisation est introduit dans les fumées en amont du séparateur gaz solide,
dans lequel une fraction recyclée des solides collectés par le séparateur gaz solide est envoyée à un dispositif de traitement (22) pour y être réactivée, avant d'être introduite, via un flux sortant du dispositif de traitement, dans les fumées en amont du séparateur gaz solide,
et dans lequel le réactif de démercurisation est dosé en mettant en oeuvre à chaque instant les opérations suivantes :
a) on détermine une valeur de concentration en mercure (Cc) à partir de (i) la concentration en mercure dans les fumées en amont des points d'introduction dans les fumées du réactif de démercurisation et du flux sortant du dispositif de traitement (22) et/ou (ii) la concentration en mercure dans les fumées en aval du séparateur gaz solide (20), et
b) on tient compte de l'occurrence de pics de mercure de sorte que :
- en dehors d'une période (P1, P2), qui débute sensiblement à l'apogée de chaque pic de mercure, on dose le réactif de démercurisation en appliquant à la valeur de concentration en mercure (Cc) une première fonction de dosage (f) qui est croissante avec la valeur de concentration en mercure (Cc), et
- lors de ladite période (P1, P2), on dose le réactif de démercurisation en appliquant à la valeur de concentration en mercure (Cc) une seconde fonction de dosage (g) qui dose le réactif de démercurisation à une valeur supérieure à celle à laquelle le réactif de démercurisation est dosé par la première fonction de dosage (f) à l'instant considéré, la seconde fonction de dosage étant décroissante avec le temps jusqu'à doser le réactif de démercurisation à une valeur égale ou inférieure à celle à laquelle le réactif de démercurisation est dosé par la première fonction de dosage à un instant où ladite période prend fin.

2. Procédé suivant la revendication 1, dans lequel l'occurrence des pics de mercure est détectée en appliquant, à chaque instant, un algorithme de surveillance sur la valeur de concentration en mercure (Cc).

3. Procédé suivant la revendication 2, dans lequel l'algorithme de surveillance est appliqué, à chaque instant, sur les N valeurs de concentration en mercure (Cc) déterminées juste avant l'instant considéré, N étant égal ou supérieur à trois.

4. Procédé suivant la revendication 1, dans lequel l'occurrence des pics de mercure est surveillée et renseignée manuellement par un opérateur.

5. Procédé suivant l'une quelconque des revendications précédentes, dans lequel, à chaque instant, on ajuste par rétroaction la valeur à laquelle le réactif de démercurisation est dosé à l'issue de l'opération b), à partir de la concentration en mercure dans les fumées en aval du séparateur gaz solide (20), notamment en utilisant un algorithme PID.

6. Procédé suivant l'une quelconque des revendications précédentes, dans lequel le dispositif de traitement (22) comprend un réacteur de réactivation dans lequel le temps de séjour de ladite fraction recyclée est compris entre 5 et 60 minutes.

7. Procédé suivant l'une quelconque des revendications précédentes, dans lequel le dispositif de traitement (22) comprend une enceinte de maturation dans laquelle le temps de séjour de ladite fraction recyclée est compris entre 5 et 20 heures.

8. Procédé suivant l'une quelconque des revendications précédentes, dans lequel un fluide, tel que des gouttelettes d'eau ou de la vapeur d'eau, est admis dans le dispositif de traitement (22) pour être mis en contact avec ladite fraction recyclée.

9. Procédé suivant l'une quelconque des revendications précédentes, dans lequel ladite fraction recyclée représente entre 50 et 95%, de préférence entre 70 et 90%, de la totalité des solides collectés par le séparateur gaz solide (20).

10. Procédé suivant l'une quelconque des revendications précédentes, dans lequel tout ou partie du réactif de démercurisation est introduit en amont du séparateur gaz solide (20) directement dans les fumées.

11. Procédé suivant l'une quelconque des revendications précédentes, dans lequel tout ou partie du réactif de démercurisation est introduit en amont du séparateur gaz solide (20) directement dans le dispositif de traitement (22).

12. Procédé suivant l'une quelconque des revendications précédentes, dans lequel le réactif de démercurisation inclut :
- un premier réactif de démercurisation qui est utilisé en dehors de ladite période (P1, P2) et optionnellement lors de ladite période, et
- un second réactif de démercurisation, qui présente une activité démercurisante supérieure à celle du premier réactif de démercurisation et qui est utilisé lors de ladite période mais pas en dehors de ladite période.

## Patentansprüche

1. Verfahren zur Entfernung von Quecksilber aus Rauchgasen,
wobei die zu behandelnden Rauchgase zu einem Feststoffgasabscheider (20) geleitet werden,
wobei ein Reagenz zur Entfernung von Quecksilber stromaufwärts von dem Feststoffgasabscheider in die Rauchgase eingeleitet wird,
wobei eine recycelte Fraktion der Feststoffe, die von dem Feststoffgasabscheider gesammelt werden, zu einer Behandlungsvorrichtung (22) geleitet wird, um dort reaktiviert zu werden, bevor sie über einen aus der Behandlungsvorrichtung austretenden Strom stromaufwärts von dem Feststoffgasabscheider in die Rauchgase eingeleitet wird,
und wobei das Quecksilberentfernungsreagenz dosiert wird, indem zu jedem Zeitpunkt die folgenden Vorgänge durchgeführt werden:
a) ein Quecksilberkonzentrationswert (Cc) wird bestimmt aus (i) der Quecksilberkonzentration in dem Rauchgas stromaufwärts von den Einleitungsstellen des Quecksilberentfernungsreagenz und des aus der Behandlungsvorrichtung (22) austretenden Stroms in das Rauchgas, und/oder (ii) der Quecksilberkonzentration in dem Rauchgas stromabwärts von dem Feststoffgasabscheider (20), und
b) das Auftreten von Quecksilberspitzen wird berücksichtigt, sodass:
- außerhalb eines Zeitraums (P1, P2), der im Wesentlichen mit dem Höhepunkt von jeder Quecksilberspitze beginnt, wird das Quecksilberentfernungsreagenz dosiert, indem auf den Quecksilberkonzentrationswert (Cc) eine erste Dosierungsfunktion (f) angewendet wird, die mit dem Quecksilberkonzentrationswert (Cc) ansteigt, und
- während der genannten Periode (P1, P2) wird das Quecksilberentfernungsreagenz dosiert, indem auf den Wert der Quecksilberkonzentration (Cc) eine zweite Dosierungsfunktion (g) angewendet wird, die das Quecksilberentfernungsreagenz auf einen Wert dosiert, der größer ist als der Wert, bei dem das Quecksilberentfernungsreagenz durch die erste Dosierungsfunktion (f) zu dem betrachteten Zeitpunkt dosiert wird, wobei die zweite Dosierfunktion mit der Zeit abnimmt, bis sie das Quecksilberentfernungsreagenz auf einen Wert dosiert, der gleich wie oder kleiner als der Wert ist, auf den das Quecksilberentfernungsreagenz durch die erste Dosierfunktion zu einem Zeitpunkt dosiert wird, an dem der Zeitraum endet.

2. Verfahren nach Anspruch 1, wobei das Auftreten von Quecksilberspitzen erfasst wird, indem zu jedem Zeitpunkt ein Überwachungsalgorithmus auf den Wert der Quecksilberkonzentration (Cc) angewendet wird.

3. Verfahren nach Anspruch 2, wobei der Überwachungsalgorithmus zu jedem Zeitpunkt auf die N Werte der Quecksilberkonzentration (Cc) angewendet wird, die unmittelbar vor dem jeweiligen Zeitpunkt bestimmt wurden, wobei N gleich wie oder größer als drei ist.

4. Verfahren nach Anspruch 1, wobei das Auftreten von Quecksilberspitzen überwacht und von einem Bediener manuell notiert wird.

5. Verfahren nach einem der vorherigen Ansprüche, wobei zu jedem Zeitpunkt durch Rückkopplung der Wert, auf den das Quecksilberentfernungsreagenz am Ende von Vorgang b) dosiert wird, anhand der Quecksilberkonzentration in den Rauchgasen stromabwärts von dem Feststoffgasabscheider (20) angepasst wird, insbesondere unter Verwendung eines PID-Algorithmus.

6. Verfahren nach einem der vorherigen Ansprüche, wobei die Verarbeitungsvorrichtung (22) einen Reaktivierungsreaktor umfasst, in dem die Verweilzeit der recycelten Fraktion zwischen 5 und 60 Minuten liegt.

7. Verfahren nach einem der vorherigen Ansprüche, wobei die Verarbeitungsvorrichtung (22) einen Reifungsraum umfasst, in dem die Verweilzeit der recycelten Fraktion zwischen 5 und 20 Stunden liegt.

8. Verfahren nach einem der vorherigen Ansprüche, wobei dem ein Fluid, wie beispielsweise Wassertröpfchen oder Wasserdampf, in die Behandlungsvorrichtung (22) eingelassen wird, um mit der recycelten Fraktion in Kontakt gebracht zu werden.

9. Verfahren nach einem der vorherigen Ansprüche, wobei die recycelte Fraktion zwischen 50 und 95 %, vorzugsweise zwischen 70 und 90 %, der gesamten Feststoffe darstellt, die von dem Feststoffgasabscheider (20) gesammelt werden.

10. Verfahren nach einem der vorherigen Ansprüche, wobei das gesamte oder ein Teil des Quecksilberentfernungsreagenz stromaufwärts von dem Feststoffgasabscheider (20) direkt in die Rauchgase eingeleitet wird.

11. Verfahren nach einem der vorherigen Ansprüche, wobei das gesamte oder ein Teil des Quecksilberentfernungsreagenz stromaufwärts von dem Feststoffgasabscheider (20) direkt in die Behandlungsvorrichtung (22) eingeleitet wird.

12. Verfahren nach einem der vorherigen Ansprüche, wobei das Quecksilberentfernungsreagenz ferner Folgendes beinhaltet:
- ein erstes Quecksilberentfernungsreagenz, das außerhalb des Zeitraums (P1, P2) und optional während des Zeitraums verwendet wird, und
- ein zweites Quecksilberentfernungsreagenz, das eine höhere Quecksilberentfernungsaktivität als das erste Quecksilberentfernungsreagenz aufweist und das während des Zeitraums, aber nicht außerhalb des Zeitraums verwendet wird.

## Claims

1. A method for the demercurisation of flue gases,
in which the flue gases to be treated are sent to a solid gas separator (20),
in which a demercurisation reagent is introduced into the flue gas upstream of the solid gas separator,
in which a recycled fraction of the solids collected by the solid gas separator is sent to a treatment device (22) for reactivation, before being introduced, via a flow leaving the treatment device, into the flue gases upstream of the solid gas separator,
and in which the demercurisation reagent is dosed by carrying out the following operations at each instant:
a) a mercury concentration value (Cc) is determined from (i) the mercury concentration in the flue gases upstream of the points where the demercurisation reagent is introduced into the flue gases and the flow leaving the treatment device (22) and/or (ii) the mercury concentration in the flue gases downstream of the solid gas separator (20), and
b) the occurrence of mercury peaks is taken into account so that:
- outside a period (P1, P2) which begins substantially at the peak of each mercury peak, the demercurisation reagent is dosed by applying to the mercury concentration value (Cc) a first dosing function (f) which increases with the mercury concentration value (Cc), and
- during the said period (P1, P2), the demercurisation reagent is dosed by applying to the mercury concentration value (Cc) a second dosing function (g) which doses the demercurisation reagent at a value greater than that at which the demercurisation reagent is dosed by the first dosing function (f) at the instant in question, the second dosing function decreasing with time until the demercurisation reagent is dosed at a value equal to or less than that at which the demercurisation reagent is dosed by the first dosing function at a time when the said period ends.

2. Method according to claim 1, in which the occurrence of mercury peaks is detected by applying, at each instant, a monitoring algorithm to the mercury concentration value (Cc).

3. Method according to claim 2, in which the monitoring algorithm is applied, at each instant, to the N mercury concentration values (Cc) determined just before the instant in question, N being equal to or greater than three.

4. Method according to claim 1, in which the occurrence of mercury peaks is monitored and entered manually by an operator.

5. A method according to any one of the preceding claims, in which, at each instant, the value at which the demercurisation reagent is dosed at the end of operation b) is adjusted by retroaction, on the basis of the mercury concentration in the flue gases downstream of the solid gas separator (20), in particular using a PID algorithm.

6. A method according to any one of the preceding claims, in which the treatment device (22) comprises a reactivation reactor in which the residence time of the said recycled fraction is between 5 and 60 minutes.

7. A method according to any one of the preceding claims, in which the treatment device (22) comprises a maturation chamber in which the residence time of the said recycled fraction is between 5 and 20 hours.

8. A method according to any one of the preceding claims, in which a fluid, such as water droplets or water vapour, is admitted to the treatment device (22) to be brought into contact with the said recycled fraction.

9. A method according to any one of the preceding claims, in which the said recycled fraction represents between 50 and 95%, preferably between 70 and 90%, of all the solids collected by the solid gas separator (20).

10. A method according to any one of the preceding claims, in which all or part of the demercurisation reagent is introduced upstream of the solid gas separator (20) directly into the flue gases.

11. A method according to any one of the preceding claims, in which all or part of the demercurisation reagent is introduced upstream of the solid gas separator (20) directly into the treatment device (22).

12. A method according to any one of the preceding claims, wherein the demercurisation reagent includes:
- a first demercurisation reagent which is used outside the said period (P1, P2) and optionally during the said period, and
- a second demercurising reagent, which has a higher demercurising activity than the first demercurising reagent and which is used during the said period but not outside the said period.
